(19) Europäisches Patentamt
European Patent Office
Office européen des brevets

(11) EP 0 903 354 B1

(12) FASCICULE DE BREVET EUROPEEN

(45) Date de publication et mention de la délivrance du brevet:
**17.11.2004 Bulletin 2004/47**

(51) Int Cl.[7]: **C08C 19/22**, C08F 279/02, C08F 293/00, C08L 51/04

(21) Numéro de dépôt: **98116845.3**

(22) Date de dépôt: **07.09.1998**

(54) **Préparation d'un polymère aromatique choc à partir d'un caoutchouc porteur d'un groupement générateur d'un radical libre stable**

Herstellung von schlagfesten vinylaromatischen Polymer aus einem Kautschuk mit einer Gruppe zur Erzeugung eines freien, stabilen Radikal

Preparation of a shock resistant vinyl aromatic polymer from a rubber which is carrier of a group generating a stable free radical

(84) Etats contractants désignés:
**AT BE DE ES FI FR GB IT NL PT SE**

(30) Priorité: **19.09.1997 FR 9711693**
**29.05.1998 FR 9806795**

(43) Date de publication de la demande:
**24.03.1999 Bulletin 1999/12**

(73) Titulaire: **Atofina**
**92800 Puteaux (FR)**

(72) Inventeurs:
- **Boutillier, Jean-Marc**
**64000 Pau (FR)**
- **Forges, Nathalie**
**64000 Pau (FR)**

(56) Documents cités:

| | |
|---|---|
| **EP-A- 0 135 280** | **EP-A- 0 726 280** |
| **WO-A-97/36944** | **WO-A-97/46593** |
| **DD-A- 294 493** | **DE-A- 4 440 675** |

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 903 354 B1

Printed by Jouve, 75001 PARIS (FR)

## Description

L'invention concerne un procédé de préparation d'une composition de polymère vinylaromatique choc, c'est-à-dire d'une composition comprenant une matrice de polymère vinylaromatique et des particules de caoutchouc.

Selon l'art antérieur, les particules de caoutchouc peuvent se présenter sous différentes morphologies. Les morphologies suivantes peuvent être obtenues :

- la morphologie de type "salami", ce qui signifie que la particule de caoutchouc contient plusieurs occlusions, généralement sensiblement sphériques, mais non concentriques, de polymère vinylaromatique,
- la morphologie de type "labyrinthe", ce qui signifie que la particule de caoutchouc contient plusieurs occlusions allongées, courbés, généralement non sphériques, généralement dissymétriques, de polymère vinylaromatique,
- la morphologie de type "oignon", ce qui signifie que la particule de caoutchouc est sensiblement sphériques et contient, concentriquement par rapport à elle-même, plusieurs occlusions de polymère vinylaromatique contenues les unes dans les autres,
- la morphologie de type "capsule", ce qui signifie que la particule de caoutchouc, généralement sensiblement sphérique, contient une seule occlusion de polymère vinylaromatique.

Les morphologies "salami", "labyrinthe" et "oignon" peuvent être appelées morphologies "multi-occlusions". Elles sont généralement sensiblement plus grosses que les capsules.

Ces morphologies jouent sur les propriétés choc et la brillance des compositions de polymère vinylaromatique. L'influence de cette morphologie sur la brillance, par ordre croissant de brillance est le suivant : salami, puis labyrinthe ou oignon, puis capsule.

Généralement, plus une particule contient d'occlusions, plus elle est grosse. C'est pourquoi, les particules de caoutchouc augmentent de taille généralement dans l'ordre suivant : capsule, puis labyrinthe ou oignon, puis salami. C'est la raison pour laquelle, on peut penser pouvoir augmenter la brillance d'une composition de polymère vinylaromatique choc en réduisant la taille des particules de caoutchouc qu'elle contient.

Suivant les propriétés finales visées du matériau, en particulier sa résistance au choc et sa brillance, on peut être amené à combiner au sein du même matériau des particules de différentes morphologies, et par exemple, jouer sur le rapport capsules/multi-occlusions. En particulier, un matériau dont la masse des particules de caoutchouc est majoritairement constituée de capsules et dont le reste de la masse des particules, par exemple 5 à 40 %, est constitué de multi-occlusions, présente un bon compromis choc/brillance.

Si l'on souhaite obtenir un polymère ou copolymère vinylaromatique choc particulièrement brillant, on peut être amené à rechercher des conditions de préparation conduisant exclusivement à la morphologie capsulaire.

Selon l'art antérieur, les morphologies différentes de celles du salami, c'est-à-dire les morphologies de type labyrinthe, oignon ou capsules ne peuvent pas être obtenues en faisant usage d'un polydiène classique, mais seulement en polymérisant le monomère vinylaromatique en présence d'un copolymère styrène-butadiène. En particulier, selon l'art antérieur, la morphologie de type capsule ne pourait être obtenue qu'en polymérisant du styrène en présence d'un copolymère styrène-butadiène comprenant au moins 15 et préférentiellement 40 % de styrène. Cet enseignement découle en particulier des documents suivants :

- Echte et al., J. Sci Ind. Res. 40, 659 (1981),
- EP 48389
- Echte, Rubber Thoughened Plastics, C. Keith Riew Editor, American Chemical Society, Washington, 1989.

Cependant, de tels copolymères sont onéreux, et de plus doivent être introduits à de plus fortes concentrations qu'un polydiène classique dans le milieu de polymérisation, pour un taux de polydiène donné dans la composition vinylaromatique choc finale. De telles quantités de copolymère sont en outre susceptibles de nécessiter de plus grandes durées de solubilisation dans le styrène, préalablement à la polymérisation. C'est pourquoi il est souhaitable de savoir obtenir une morphologie capsule, oignon ou labyrinthe, tout en faisant usage d'un caoutchouc classique, moins onéreux, et pouvant être introduit en plus faible quantité dans le milieu de polymérisation.

Le rapport capsules/multi-occlusions recherché pour un matériau donné peut par exemple être obtenu par un mélange de quantités définies d'un polymère vinylaromatique choc ne contenant que des capsules et d'un polymère vinylaromatique choc ne contenant que des particules de type multi-occlusion.

La demande de brevet EP 0726280 enseigne qu'il est possible de réaliser un polystyrène choc par polymérisation du styrène en présence d'un caoutchouc et d'un radical libre stable. Cependant, dans les exemples de réalisation de ce document, le matériau final ne comprend pas de particules de type capsule. Les exemples de réalisation de ce document enseignent que la présence du radical libre stable lors de la polymérisation peut conduire à une augmentation de la taille des particules de caoutchouc au sein du matériau final.

Le procédé selon l'invention propose une solution pour l'obtention de morphologies différentes de celle du salami, par exemple dans le but d'augmenter la brillance du polymère vinylaromatique choc, sans qu'il ne soit nécessaire de faire appel à un copolymère styrène-butadiène, en faisant appel à un homopolybutadiène. Il n'est cependant pas exclu d'utiliser un copolymère styrène-butadiène, dès lors que l'on veut combiner l'avantage de l'usage d'un tel copolymère, et l'avantage du fait que celui-ci est porteur d'un groupement générateur de radical libre stable. Une telle combinaison permet d'utiliser un caoutchouc portant moins de groupements générateur de radical libre stable que si le caoutchouc était dérivé d'un polybutadiène sans unité de styrène en tant que comonomère.

Par morphologie différente de celle du salami, on entend au moins l'une des morphologies labyrinthe, oignon ou capsules, ou leurs combinaisons, le cas échéant combiné également au sein du même matériau avec des particules du type salami. Le procédé selon l'invention peut mener à une composition comprenant un fort taux de capsules.

Le procédé selon l'invention comprend une étape de polymérisation d'au moins un monomère vinylaromatique en présence d'un caoutchouc comprenant un groupement générateur d'un radical libre stable, ci-après appelé caoutchouc porteur.

Le caoutchouc porteur est préparé préalablement à la polymérisation du monomère vinylaromatique.

Générateměnt, le procédé selon l'invention mène à un matériau final dont les particules de caoutchouc présentent une plus faible taille moyenne, en comparaison avec un procédé faisant intervenir un caoutchouc classique, non porteur de groupement générateur de radicaux libres stables, dans des conditions de fonctionnement par ailleurs comparables.

Le caoutchouc porteur peut par exemple être obtenu par un procédé comprenant une étape de traitement thermique d'un élastomère classiquement utilisé pour la préparation des polymères vinylaromatique choc, en présence d'un radical libre stable, d'un initiateur de radicaux libres capable d'arracher un proton de l'élastomère, d'un solvant, et en l'absence de monomère vinylaromatique. Un tel initiateur peut par exemple être choisi dans la liste des amorceurs de polymérisation proposés plus loin pour intervenir lors de la polymérisation selon l'invention. De préférence, l'initiateur est choisi dans la liste suivante :

tert-butyl-isopropylmonoperoxycarbonate,
tert-butyl(2 éthyl hexyl) monoperoxycarbonate,
peroxyde de dicumyle,
peroxyde de ditertiobutyle,
1,1 di(tertiobutylperoxy)cyclohexane,
1,1 di(tertiobutylperoxy)-3,3,5-triméthylcyclohexane,
tertiobutylperoxyacétate,
peroxyde de cumyle et de tertiobutyle,
tertiobutylperoxybenzoate,
tertiobutylperoxy-2éthylhexanoate.

Les conditions opératoires relatives à ce traitement thermique, à savoir nature et quantités des ingrédients utilisés, température, durée, doivent de préférence être telles que l'on obtienne un caoutchouc portant en moyenne de 0,1 à 10 groupements générateurs de radical libre stable par chaîne de caoutchouc.

Si l'on souhaite la présence de capsules dans le matériau final, il est préférable que le caoutchouc porte en moyenne de 0,5 à 2 et de manière encore préférée de 0,5 à 0,9 groupements générateurs de radical libre stable par chaîne de caoutchouc. Dans ce cas, l'homme du métier est capable de rechercher les conditions opératoires pour le traitement thermique de l'élastomère, menant à un caoutchouc portant en moyenne de 0,5 à 2 ou 0,5 à 0,9 groupements générateurs de radical libre stable par chaîne de caoutchouc.

Si on a utilisé un radical libre stable bifonctionnel, c'est-à-dire possédant en deux endroits différents de sa molécule l'état de radical, comme c'est par exemple le cas de :

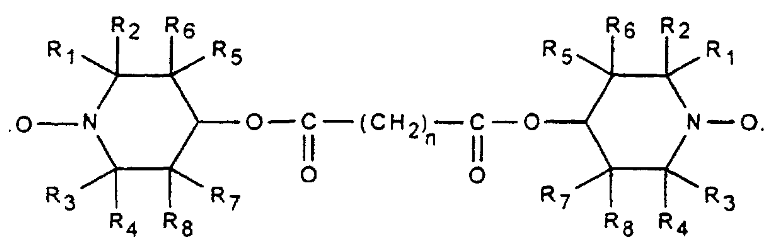

et si le traitement thermique a été efficace, de sorte que chaque molécule de ce radical libre stable est reliée à deux

chaînes d'élastomère, on considère que l'ensemble formé par les deux chaînes d'élastomère et la molécule bifonctionnelle de radical libre stable est un caoutchouc portant en moyenne 1 groupement générateur de radical libre stable par chaîne de caoutchouc.

Ce raisonnement peut bien entenu être généralisé quelle que soit la fonctionnalité du radical libre stable.

Le traitement thermique est de préférence réalisé de façon à ce que l'initiateur de radicaux libre ait une efficacité maximale, c'est-à-dire de façon à ce que chaque radical libre qu'il est susceptible de générer arrache effectivement un proton de l'élastomère. On est sensiblement dans ces conditions si la température du traitement thermique est comprise entre (T½ — 50°C) et (T½ + 50°C), T½ représentant la température pour laquelle le temps de demi-vie de l'initiateur est de une heure. De préférence, de façon à ne pas dégrader par réticulation l'élastomère, le traitement thermique est réalisé à moins de 150°C. De préférence, le traitement thermique est réalisé à plus de 50°C.

De préférence, l'initiateur est choisi de sorte que la température pour laquelle son temps de demi-vie est de une heure, soit comprise entre 90 et 150°C.

Si l'on représente par

(SFR) : le nombre de mole de radical libre stable,
$F_{SFR}$ : la fonctionnalité du radical libre stable, c'est-à-dire le nombre de sites sur la même molécule de radical libre stable présentant l'état de radical libre stable,
(INIT) : le nombre de mole d'initiateur de radicaux libres,
$F_{INIT}$ : la fonctionnalité de l'initiateur de radicaux libres, c'est-à-dire le nombre de radicaux libres que chaque molécule d'initiateur est susceptible de générer,
(ELAST) : le nombre de mole d'élastomère,

on introduit généralement les ingrédients nécessaires au traitement thermique de sorte que

$$\frac{F_{INIT} \text{ x } (INIT)}{F_{SFR} \text{ x } (SFR)}$$

soit compris entre 0,1 et 10,

on introduit également généralement les ingrédients nécessaires au traitement thermique de sorte que

$$\frac{(ELAST)}{(SFR) \text{ x } F_{SFR}}$$

soit compris entre 0,1 et 10.

Le solvant peut par exemple être choisi parmi les solvants aromatiques comme le toluène, le benzène, l'éthylbenzène, ou les solvants alicycliques comme le cyclohexane. Le solvant est de préférence en quantité suffisante pour que le milieu contenant tous les ingrédients nécessaires à ce traitement thermique, soit homogène. A titre d'exemple, le solvant peut généralement être présent à raison de 25 à 95 % en poids.

Une fois préparé, le caoutchouc peut être isolé comme on le ferait avec un caoutchouc classique, par exemple après précipitation au méthanol puis filtration et séchage, puis stocké. Le séchage peut être réalisé à la pression atmosphérique ou sous vide, par exemple de la température ambiante à 150°C et plus particulièrement de la température ambiante à 60°C.

On peut cependant également ne pas l'isoler et le mettre tel quel dans le milieu de polymérisation du procédé selon l'invention pour l'obtention d'un polymère vinylatomatique choc.

Pendant l'étape de polymérisation du procédé selon l'invention, le caoutchouc porteur libère le radical libre stable, de sorte que des unités de monomère vinylaromatique peuvent s'insérer entre la chaine de caoutchouc et le radical libre stable. Le caoutchouc est porteur de suffisamment de groupements générateurs de radicaux libres stables pour influencer sensiblement la morphologie des particules lors de l'étape de polymérisation.

Lorsque l'on augmente le taux moyen de groupements générateurs de radicaux libres stables par chaînes de caoutchouc, on augmente tout d'abord les chances de formation de labyrinthes ou d'oignons, puis, lorsque l'on augmente encore ce taux, on augmente les chances de formation de capsules.

De préférence, le caoutchouc comprend en moyenne de 0,1 à 10 groupements générateur par chaîne de caoutchouc. Il s'agit ici d'une moyenne, et l'on ne sortirait pas du cadre de la présente invention par exemple en polymérisant un monomère vinylaromatique en présence de deux polybutadiènes, dont l'un seulement serait porteur de groupements générateurs de radicaux libres stables. Si l'on souhaite la présence de capsules dans le matériau final, il est préférable que le caoutchouc comprenne en moyenne de 0,5 à 2 et de manière encore préférée de 0,5 à

0,9 groupements générateurs de radical libre stable par chaîne de caoutchouc.

Il ne faut pas confondre un radical libre stable avec les radicaux libres dont la durée de vie est éphémère (quelques millisecondes) comme les radicaux libres issus des amorceurs habituels de polymérisation comme les peroxydes, hydroperoxydes et amorceurs de type azo. Les radicaux libres amorceurs de polymérisation tendent à accélérer la polymérisation. Au contraire, les radicaux libres stables tendent généralement à ralentir la polymérisation.

Généralement, un radical libre stable peut être isolé à l'état de radical à la température ambiante. Un radical libre stable est suffisamment stable pour que son état de radical libre puisse être caractérisé par les méthodes spectroscopiques.

Il est rappelé que la notion de radical libre stable est connue de l'homme du métier pour désigner un radical tellement persistant et non réactif vis-à-vis de l'air et de l'humidité dans l'air ambiant, que le radical pur peut être manipulé et stocké sans plus de précautions à la température ambiante que le sont la majorité des produits chimiques commerciaux (voir à ce sujet D. Griller et K. Ingold, Accounts of Chemical Research, 1976, 9, 13-19, ou Organic Chemistry of Stable Free Radicals, A. Forrester et coll., Academic Press, 1968).

La famille des radicaux libres stables inclut notamment les composés agissant comme inhibiteurs de polymérisation radicalaire, les radicaux nitroxydes stables c'est-à-dire comprenant le groupement = $N\text{-}O^{\bullet}$. On peut utiliser comme radical libre stable par exemple les radicaux représentés par les formules suivantes :

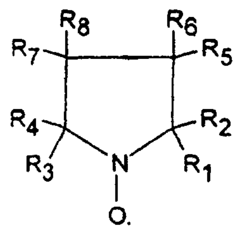
,
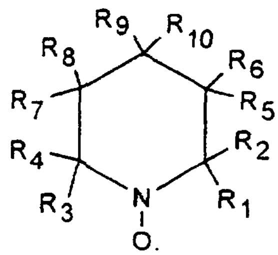
,
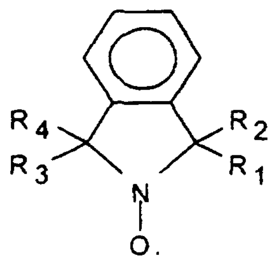

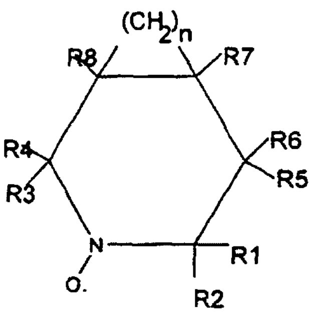

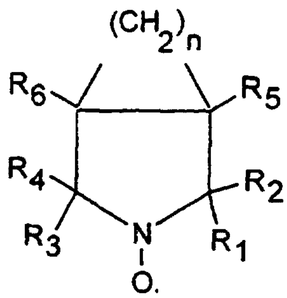
,
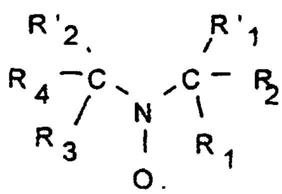

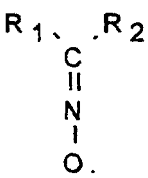
,
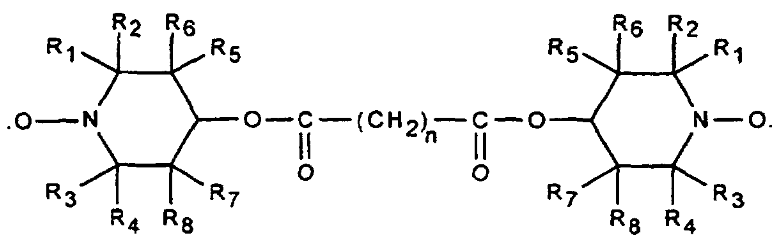
,

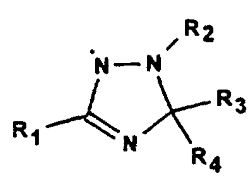

dans lesquelles R1, R2, R3, R4, R'1 et R'2 pouvant être identiques ou différents représentent un atome d'halogène tel que le chlore, le brome ou l'iode, un groupement hydrocarboné linéaire, ramifié ou cyclique, saturé ou insaturé tels qu'un radical alkyle ou phényle, ou un groupement ester -COOR ou un groupement alcoxyle -OR, ou un groupement phosphonate $-PO(OR)_2$, ou une chaîne de polymère pouvant par exemple être une chaîne de polyméthacrylate de méthyle, de polybutadiène, de polyoléfine comme de polyéthylène ou de polypropylène, mais étant de préférence une chaîne de polystyrène, et dans lesquelles R5, R6, R7, R8, R9 et R10, pouvant être identiques ou différent, peuvent être choisis dans la même famille de groupement que celle qui vient d'être envisagée pour R1, R2, R3, R4, R'1 et R'2, et de plus peuvent représenter un atome d'hydrogène, un groupement hydroxyde -OH, un groupement acide tel que -COOH ou - $PO(OH)_2$ ou $-SO_3H$.

En particulier, le radical libre stable peut être le 2,2,5,5-tétraméthyl-1-pyrrolidinyloxy commercialisé sous la marque PROXYL ou le 2,2,6,6-tetraméthyl-1-piperidinyloxy, généralement commercialisé sous la dénomination TEMPO.

Le radical libre stable peut également être choisi dans la liste suivante

- N-tertiobutyl-1-phényl-2 méthyl propyl nitroxyde,
- N-tertiobutyl-1-(2-naphtyl)-2-méthyl propyl nitroxyde,
- N-tertiobutyl-1-diéthylphosphono-2,2-diméthyl propyl nitroxyde,
- N-tertiobutyl-1-dibenzylphosphono-2,2-diméthyl propyl nitroxyde,
- N-phényl-1-diéthyl phosphono-2,2-diméthyl propyl nitroxyde,
- N-phényl-1-diéthyl phosphono-1-méthyl éthyl nitroxyde,
- N-(1-phényl 2-méthyl propyl)-1-diéthylphosphono-1-méthyl éthyl nitroxyde,
- 4-hydroxy-2,2,6,6-tétraméthyl-1-piperidinyloxy,
- 4-oxo-2,2,6,6-tétraméthyl-1-piperidinyloxy,
- 2,4,6-tri-tert-butylphenoxy.

Hormis la présence du radical libre stable, les autres ingrédients mis en oeuvre, ainsi que les conditions de synthèse, sont ceux habituellement utilisés pour la fabrication de compositions de polymère vinylaromatique choc.

A titre d'exemple, le milieu destiné à être polymérisé dans l'étape du procédé selon l'invention peut comprendre :

- pour 100 parties en poids de monomère vinylaromatique,
- 2 à 35 parties en poids de caoutchouc porteur, et
- 0 à 50 parties en poids de solvant.

Par monomère vinylaromatique, on entend le styrène, le styrène substitué sur le groupement vinyl par un groupement alkyl tel que l'alpha-méthylstyrène ou l'alpha-éthylstyrène, le styrène substitué sur le cycle par un groupement alkyl tel que l'ortho-vinyltoluène, le para-vinyltoluène, l'ortho-éthylstyrène, le 2-4-diméthylstyrène, le styrène substitué sur le cycle par un halogène comme par exemple le 2,4-dichlorostyrène, le styrène substitué à la fois par un halogène et un groupement alkyl tel que le 2-chloro-4-méthylstyrène, ainsi que le vinylanthracène. Le styrène est un monomère vinylaromatique préféré.

Le caoutchouc porteur est obtenu à partir d'un élastomère que l'on a modifié pour lui faire porter un groupement générateur de radical libre stable.

Par élastomère, on entend ceux habituellement utilisés pour améliorer les propriétés chocs des polymères vinylaromatiques. Ce sont habituellement des polydiènes conjugués tels que le polybutadiène (ce qui inclut homopolybutadiène), le polyisoprène, les copolymères styrène-butadiène de type élastomère également appelés caoutchouc "SBR" ("styrène-butadière rubber").

L'élastomère présente généralement une masse moléculaire moyenne en nombre allant de 50 000 à 350 000 et une masse moléculaire moyenne en poids allant de 100 000 à 500 000. Il en va de même pour le caoutchouc porteur.

Le milieu de polymérisation peut également contenir au moins un solvant organique. Celui-ci est choisi de telle sorte qu'il ne bout pas dans les conditions de polymérisation et de telle sorte qu'il soit miscible avec le monomère vinylaromatique et le polymère vinylaromatique qui en dérive. On peut utiliser les hydrocarbures alicycliques tel que le cyclohexane ou de manière préférée, les aromatiques tels que le toluène, le benzène, l'éthylbenzène ou le xylène.

Le milieu de polymérisation peut de plus contenir au moins un monomère copolymérisable avec le ou les monomères vinylaromatique, comme par exemple au moins un monomère acrylique ou méthacrylique ou l'acrylonitrile.

On peut ajouter au milieu de polymérisation, avant ou au cours de la polymérisation, au moins un adjuvant ou initiateur de polymérisation, habituels à ce genre de préparation. Ces adjuvants peuvent être des plastifiants comme des huiles minérales, le stéarate de butyle ou le phtalate de dioctyle, des stabilisants comme des antioxydants pouvant être le phénol substitué par un groupement alkyl tel que le ditertiobutylparacrésol ou les phosphites telles que le trinonylphénylphosphite.

Si un plastifiant est introduit, celui-ci peut être l'être en quantité telle qu'il soit présent dans la composition finalement synthétisée à raison de 0 à 6% en poids.

Si un stabilisant est introduit, celui-ci peut être présent dans le milieu de polymérisation à raison de 0 à 3000 ppm.

La réaction de polymérisation peut être amorcée thermiquement, sans initiateur de polymérisation ni catalyseur, ou être amorcée par un initiateur de polymérisation. Si la polymérisation est amorcée thermiquement, elle peut être réalisée entre 100 et 200° C et de préférence entre 110 à 160° C.

Si la polymérisation est amorcée par un amorceur de polymérisation, elle peut être réalisée entre 50 et 200° C et de préférence entre 90 et 160° C. L'amorceur de polymérisation peut être choisi parmi les peroxydes et hydroperoxydes organiques comme le peroxyde de dibenzoyle, le peroxybenzoate de tert-butyle, le 1,1-bis-(tertbutylperoxy) cyclohexane ou les composés azoïques tel que l'azobis-isobutyronitrile. L'amorceur de polymérisation peut également être choisi dans la liste suivante :

tert-butyl-isopropylmonoperoxycarbonate,
tert-butyl(2 éthyl hexyl) monoperoxycarbonate,
peroxyde de dicumyle,
peroxyde de ditertiobutyle,
1,1 di(tertiobutylperoxy)cyclohexane,
1,1 di(tertiobutylperoxy)-3,3,5-triméthylcyclohexane,
tertiobutylperoxyacétate,
peroxyde de cumyle et de tertiobutyle,
tertiobutylperoxybenzoate,
tertiobutylperoxy-2éthylhexanoate.

L'amorceur de polymérisation peut être présent à raison de 50 à 2000 ppm sur la base du ou des monomères vinylaromatiques introduits.

Au cours de la polymérisation se produit le phénomène bien connu d'inversion de phase conduisant à la formation de particules (également appelées nodules) de caoutchouc dispersés dans une matrice de polymère vinylaromatique. Pendant cette polymérisation, l'agitation doit être suffisante pour que la dispersion des particules de caoutchouc soit uniforme.

Après polymérisation, il convient de procéder à l'élimination des espèces volatiles comme les monomères n'ayant pas réagi et l'éventuel solvant organique. Ceci peut être réalisé par des techniques conventionnelles comme par l'usage d'un dévolatiliseur fonctionnant à chaud et sous vide.

La teneur finale de la composition selon l'invention en caoutchouc et en polymère ou copolymère vinylaromatique dépend du degré d'avancement de la polymérisation réalisée avant élimination des espèces volatiles. En effet, si le degré d'avancement de la polymérisation est faible, l'élimination des espèces volatiles produira l'élimination d'une forte quantité de monomère vinylaromatique et la teneur finale de la composition en caoutchouc sera plus élevée.

L'avancement de la polymérisation peut être suivi grâce à des prélèvements effectués au cours de l'étape de polymérisation et par détermination du taux de solide sur les échantillons prélevés. Par taux de solide on entend le pourcentage en poids de solide obtenu après évaporation sous un vide de 25 millibars pendant environ 20 minutes à 200° C des échantillons prélevés par rapport au poids initial de l'échantillon prélevé. On pourra pousser la polymérisation, par exemple jusqu'à l'obtention d'un taux de solide compris entre 60 et 80 % en poids.

Il est préférable d'ajuster les quantités en ingrédients introduits et les conditions de fabrication pour que la composition finale contienne entre 2 et 25 % et de manière encore préférée entre 4 et 15 % de caoutchouc.

En fin de polymérisation, on obtient une composition comprenant une matrice d'un polymère vinylaromatique entourant des particules d'un caoutchouc, ladite composition comprenant également un radical libre stable et/ou un groupement générateur d'un radical libre stable faisant partie d'une chaîne de polymère. En effet, le radical libre stable peut se trouver sous forme libre, et/ou sous forme liée par une liaison covalente à une chaîne de polymère. Généralement, la tendance d'un groupement générateur de radical libre stable à libérer son radical libre stable augmente avec la température. La composition finale est donc plus ou moins riche en radical libre stable ou groupement générateur de radical libre stable, suivant l'intensité du traitement de dévolatilisation réalisé sur ladite composition et également suivant la nature du radical libre stable ou du groupement générateur d'un radical libre stable. Le traitement de dévolatilisation est d'autant plus intense que sa durée est longue et/ou sa température est élevée et/ou son vide est poussé.

L'invention permet donc l'obtention d'une composition comprenant une matrice de polymère vinylaromatique entourant des particules de caoutchouc au moins partiellement sous la forme de labyrinthe, ladite composition comprenant un radical libre stable et/ou un groupement générateur de radical libre stable faisant partie d'une chaîne de polymère.

L'invention permet également l'obtention d'une composition comprenant une matrice de polymère vinylaromatique entourant des particules de caoutchouc au moins partiellement sous la forme d'oignons, ladite composition comprenant un radical libre stable et/ou un groupement générateur de radical libre stable faisant partie d'une chaîne de polymère.

L'invention permet également l'obtention d'une composition comprenant une matrice de polymère vinylaromatique entourant des particules de caoutchouc au moins partiellement sous la forme de capsules, ladite composition comprenant un radical libre stable et/ou un groupement générateur de radical libre stable faisant partie d'une chaîne de polymère, lesdites capsules pouvant constituer la morphologie d'au moins 95 % des particules de caoutchouc.

Dans les exemples qui suivent, la structure et les propriétés des compositions obtenues ont été déterminées par les techniques suivantes :

- morphologie des particules de caoutchouc : microscopie électronique à transmission sur des coupes fines colorées par le tétraoxyde d'osmium,
- taille médiane des particules de caoutchouc : granulométrie à sédimentation (CAPA 700), après mise en solution de la matrice dans la méthyléthylcétone.

**EXEMPLE 1 (COMPARATIF)**

Dans un réacteur en verre de 2 l muni d'un système d'agitation et d'une régulation de température, on introduit à température ambiante 490 g de styrène, 168 g d'éthylbenzène et 70 g d'un copolymère à blocs styrène-butadiène de marque BL 6533 commercialisé par la société BAYER, ledit copolymère comportant 40 % en poids d'unités issues du styrène. On porte l'agitation à 150 révolutions par minute.

Après solubilisation totale du copolymère, la température est portée à 120°C en 30 min., puis est maintenue à cette température jusqu'à l'obtention d'un taux de solide de 60 %, toujours sous agitation. Le contenu du réacteur est alors transféré dans une étuve à la pression atmosphérique et à l'air ambiant pour poursuivre la polymérisation, tout d'abord 3 heures à 150°C, puis 2 heures à 180°C.

Les propriétés de la composition obtenue sont indiquées dans le tableau 1. L'essentiel des particules de caoutchouc, c'est-à-dire plus de 95 % d'entre elles, apparaissent sous la forme de capsules.

**EXEMPLE 2 (COMPARATIF)**

Dans le même réacteur que celui de l'exemple 1, on introduit à température ambiante 490 g de styrène, 168 g d'éthylbenzène et 42 g de polybutadiène de marque HX 527 commercialisé par la société BAYER. Ce polybutadiène présente une masse moléculaire moyenne en poids de 247 000 et un indice de polymolécularité de 2, une viscosité Mooney ML (1+4) à 100°C de 46.

On porte l'agitation à 150 révolutions par minute.

Après solubilisation totale du polybutadiène, on introduit à température ambiante 0,1488 g (soit $9{,}5.10^{-4}$ mole) de 2,2,6,6-tétraméthyl-1-piperidinyloxy (communément appelé TEMPO) et 0,1848 g (soit $7{,}9.10^{-4}$ mole) de 0-0-tertiobutyl-0-isopropyl-monoperoxy-carbonate commercialisé par la société LUPEROX sous la marque TBIC-M75. Le mélange est ensuite porté à 120°C en 30 minutes, puis est maintenu à cette température jusqu'à l'obtention d'un taux de solide de 60 %, toujours sous agitation. Le contenu du réacteur est alors transféré dans une étuve à la pression atmosphérique et à l'air ambiant pour poursuivre la polymérisation, tout d'abord 3 heures à 150°C, puis 2 heures à 180°C. Les propriétés de la composition obtenue sont indiquées dans le tableau 1. L'essentiel des particules de caoutchouc, c'est-à-dire plus de 80 % d'entre elles, apparaissent sous la forme de salamis.

**EXEMPLE 3**

Dans le même réacteur que celui de l'exemple 1, on introduit à température ambiante 168 g d'éthylbenzène et 42 g de polybutadiène HX 527. On porte l'agitation à 150 révolutions par minute. Après solubilisation totale du polybutadiène, on introduit $9{,}5.10^{-4}$ moles de Tempo et $7{,}9.10^{-4}$ mole du peroxyde TBIC-M75, et l'on porte le réacteur à 120°C pendant 2 heures sous une agitation de 50 révolutions par minute.

On ajoute alors 490 g de styrène et l'on maintient la température à 120°C jusqu'à l'obtention d'un taux de solide de 60 % sous une agitation de 150 révolutions par minute. La polymérisation est poursuivie en étuve comme pour les exemples précédents. Les propriétés de la composition obtenue sont indiquées dans le tableau 1. L'essentiel des particules de caoutchouc, c'est-à-dire plus de 95 % d'entre elles apparaissent sous la forme de capsules.

| | Exemple n° | | |
|---|---|---|---|
| | 1 | 2 | 3 |
| TAUX DE POLYBUTADIENE (% EN POIDS) | 6 | 6 | 6 |
| TAILLE MEDIANE DES NODULES (EN VOLUME) | 0,16 µm | 1,43 µm | 0,25 µm |
| MORPHOLOGIE | capsules | salamis | capsules |

TABLEAU 1

## Revendications

1. Procédé de préparation d'un caoutchouc porteur d'un groupement générateur d'un radical libre stable comprenant une étape de traitement thermique d'un élastomère en présence d'un radical libre stable, d'un initiateur de radicaux libres capable d'arracher un proton de l'élastomère, d'un solvant et en l'absence de monomère vinylaromatique, de façon à ce que le caoutchouc porte en moyenne 0,1 à 10 groupements générateurs de radical libre stable par chaîne de caoutchouc.

2. Procédé selon la revendication 1, **caractérisé en ce que** les conditions opératoires du traitement thermique sont telles que le caoutchouc porte en moyenne 0,5 à 2 groupements générateurs de radical libre stable par chaîne de caoutchouc.

3. Procédé selon la revendication 2, **caractérisé en ce que** les conditions opératoires du traitement thermique sont telles que le caoutchouc porte en moyenne 0,5 à 0,9 groupements générateurs de radical libre stable par chaîne de caoutchouc.

4. Procédé selon l'une des revendications précédentes **caractérisé en ce que** le nombre (SFR) de mole de radical libre stable, le nombre (INIT) de mole d'initiateur de radicaux libres, le nombre (ELAST) de mole d'élastomère, sont tels que :

$$\frac{F_{INIT} \times (INIT)}{F_{SFR} \times (SFR)}$$

soit compris entre 0,1 et 10,

$$\frac{(ELAST)}{(SFR) \times F_{SFR}}$$

soit compris entre 0,1 et 10,
$F_{SFR}$ représentant la fonctionnalité du radical libre stable, c'est-à-dire le nombre de sites sur la même molécule de radical libre stable présentant l'état de radical libre stable, et $F_{INIT}$ représentant la fonctionnalité de l'initiateur de radicaux libres, c'est-à-dire le nombre de radicaux libres que chaque molécule d'initiateur est susceptible de générer.

5. Procédé selon l'une des revendications précédentes **caractérisé en ce que** la température du traitement thermique est comprise entre (T½-50°C) et (T½+50°C), T½ représentant la température pour laquelle le temps de demivie de l'initiateur est de une heure.

6. Procédé selon l'une des revendications précédentes **caractérisé en ce que** le traitement thermique est réalisé entre 50°C et 150°C.

7. Procédé selon l'une des revendications précédentes **caractérisé en ce que** l'élastomère est un homopolybutadiène.

8. Procédé selon l'une des revendications précédentes **caractérisé en ce que** l'élastomère présente une masse moléculaire moyenne en nombre allant de 50 000 à 350 000 et une masse moléculaire moyenne en poids allant de 100 000 à 500 000.

9. Procédé de préparation d'une composition comprenant une matrice de polymère vinylaromatique et des particules de caoutchouc comprenant une étape de polymérisation d'au moins un monomère vinylaromatique en présence d'un caoutchouc obtenu suivant le procédé de l'une quelconque des revendications 1 à 8.

10. Procédé selon la revendication 9 **caractérisé en ce que** la polymérisation est amorcée thermiquement, sans initiateur ni catalyseur, et est réalisée entre 100 et 200°C.

11. Procédé selon la revendication 9 **caractérisé en ce que** la polymérisation est réalisée entre 90 et 160°C, en présence d'un amorceur de polymérisation.

12. Procédé selon l'une des revendications 9 à 11 **caractérisé en ce que** au moins un monomère vinylaromatique est le styrène.

13. Procédé selon l'une des revendications 9 à 12 **caractérisé en ce que** les particules de caoutchouc sont au moins partiellement sous une des formes suivantes : labyrinthe, oignon ou capsule.

14. Procédé selon la revendication 13 **caractérisé en ce que** au moins 95 % des particules de caoutchouc sont sous la forme de capsules.

## Patentansprüche

1. Verfahren zur Herstellung eines Kautschuks mit einer Gruppe, die ein stabiles freies Radikal erzeugt, welches einen Schritt der thermischen Behandlung eines Elastomers in Gegenwart eines stabilen freien Radikals, eines Radikalinitiators, der ein Proton von dem Elastomer abziehen kann, eines Lösungsmittels und in Abwesenheit von vinylaromatischem Monomer auf eine Weise umfasst, dass der Kautschuk im Durchschnitt pro Kautschukkette 0,1 bis 10 Gruppen trägt, die stabiles freies Radikal erzeugen.

2. Verfahren nach Anspruch 1, **dadurch gekennzeichnet, dass** die Bedingungen der thermischen Behandlung derart sind, dass der Kautschuk im Durchschnitt pro Kautschukkette 0,5 bis 2 Gruppen trägt, die stabiles freies Radikal erzeugen.

3. Verfahren nach Anspruch 2, **dadurch gekennzeichnet, dass** die Arbeitsbedingungen der thermischen Behandlung derart sind, dass der Kautschuk im Durchschnitt pro Kautschukkette 0,5 bis 0,9 Gruppen trägt, die stabiles freies Radikal erzeugen.

4. Verfahren nach einem der vorstehenden Ansprüche, **dadurch gekennzeichnet, dass** die Anzahl (SFR) mol an stabilem freiem Radikal, die Anzahl (INIT) mol des Radikalinitiators, die Anzahl (ELAST) mol Elastomer derart sind, dass:

$$\frac{F_{INIT} \text{ x } (INIT)}{F_{SFR} \text{ x } (SFR)}$$

zwischen 0,1 und 10 liegt,

$$\frac{(ELAST)}{(SFR) \text{ x } F_{SFR}}$$

zwischen 0,1 und 10 liegt,
wobei $F_{SFR}$ die Funktionalität des stabilen freien Radikals darstellt, d.h. die Anzahl der Stellen am gleichen Molekül des stabilen freien Radikals, die im Zustand des stabilen freien Radikals vorliegen, und $F_{INIT}$ die Funktionalität des Radikalinitiators darstellt, d.h. die Anzahl an freien Radikalen, die jedes Initiatormolekül erzeugen kann.

5. Verfahren nach einem der vorstehenden Ansprüche, **dadurch gekennzeichnet, dass** die Temperatur der thermischen Behandlung zwischen (T½-50°C) und (T½+50°C) liegt, wobei T½ die Temperatur darstellt, bei der die Halbwertszeit des Initiators eine Stunde beträgt.

6. Verfahren nach einem der vorstehenden Ansprüche, **dadurch gekennzeichnet, dass** die thermische Behandlung bei zwischen 50°C und 150°C durchgeführt wird.

7. Verfahren nach einem der vorstehenden Ansprüche, **dadurch gekennzeichnet, dass** das Elastomer ein Homopolybutadien ist.

8. Verfahren nach einem der vorstehenden Ansprüche, **dadurch gekennzeichnet, dass** das Elastomer ein zahlengemitteltes Molekulargewicht von 50 000 bis 350 000 und ein gewichtsgemitteltes Molekulargewicht von 100 000 bis 500 000 aufweist.

9. Verfahren zur Herstellung einer Zusammensetzung, die eine Matrix aus einem vinylaromatischen Polymer und Kautschukteilchen umfasst, umfassend einen Schritt der Polymerisation mindestens eines vinylaromatischen Monomers in Gegenwart eines Kautschuks, der nach dem Verfahren nach einem der Ansprüche 1 bis 8 erhalten wird.

10. Verfahren nach Anspruch 9, **dadurch gekennzeichnet, dass** die Polymerisation thermisch, weder mit Initiator noch mit Katalysator, eingeleitet und bei zwischen 100 und 200°C durchgeführt wird.

11. Verfahren nach Anspruch 9, **dadurch gekennzeichnet, dass** die Polymerisation bei zwischen 90 und 160°C in Gegenwart eines Polymerisationsstarters durchgeführt wird.

12. Verfahren nach einem der Ansprüche 9 bis 11, **dadurch gekennzeichnet, dass** mindestens ein vinylaromatisches Monomer Styrol ist.

13. Verfahren nach einem der Ansprüche 9 bis 12, **dadurch gekennzeichnet, dass** die Kautschukteilchen mindestens teilweise in einer der folgenden Formen vorliegen: Labyrinth, Zwiebel oder Kapsel.

14. Verfahren nach Anspruch 13, **dadurch gekennzeichnet, dass** mindestens 95% der Kautschukteilchen in Form von Kapseln vorliegen.

## Claims

1. Process for preparing a rubber which carries a group which generates a stable free radical, including a step of heat treatment of an elastomer in the presence of a stable free radical, of a free-radical initiator which is capable of withdrawing a proton from the elastomer, and of a solvent and in the absence of vinylaromatic monomer, such that the rubber carries on average from 0.1 to 10 groups which generate a stable free radical per rubber chain.

2. Process according to Claim 1, **characterized in that** the operating conditions of the heat treatment are such that the rubber carries on average from 0.5 to 2 groups which generate a stable free radical per rubber chain.

3. Process according to Claim 2, **characterized in that** the operating conditions of the heat treatment are such that the rubber carries on average from 0.5 to 0.9 groups which generate a stable free radical per rubber chain.

4. Process according to one of the preceding claims, **characterized in that** the number (SFR) of moles of stable free radical, the number (INIT) of moles of free-radical initiator and the number (ELAST) of moles of elastomer are such that:

$$\frac{F_{INIT} x\ (INIT)}{F_{SFR} x (SFR)}$$

is between 0.1 and 10,

$$\frac{(ELAST)}{(SFR) \times F_{SFR}}$$

is between 0.1 and 10.
$F_{SFR}$ representing the functionality of the stable free radical, i.e. the number of sites on the same stable free radical molecule which exhibit the stable free radical state, and $F_{INIT}$ representing the functionality of the free-radical initiator, i.e. the number of free radicals which each molecule of initiator is capable of generating.

**5.** Process according to one of the preceding claims, **characterized in that** the temperature of the heat treatment is between (T½ - 50°C) and (T½ + 50°C), where T½ represents the temperature for which the half-life of the initiator is one hour.

**6.** Process according to one of the preceding claims, **characterized in that** the heat treatment is carried out at between 50°C and 150°C.

**7.** Process according to one of the preceding claims, **characterized in that** the elastomer is a homopolybutadiene.

**8.** Process according to one of the preceding claims, **characterized in that** the elastomer has a number-average molecular mass of from 50,000 to 350,000 and a weight-average molecular mass of from 100,000 to 500,000.

**9.** Process for preparing a composition comprising a vinylaromatic polymer matrix and particles of rubber, comprising a step of polymerizing at least one vinylaromatic monomer in the presence of a rubber obtained according to the process of any one of Claims 1 to 8.

**10.** Process according to Claim 9, **characterized in that** the polymerization is initiated thermally, without either initiator or catalyst, and is carried out at between 100 and 200°C.

**11.** Process according to Claim 9, **characterized in that** the polymerization is carried out at between 90 and 160°C in the presence of a polymerization initiator.

**12.** Process according to one of Claims 9 to 11, **characterized in that** at least one vinylaromatic monomer is styrene.

**13.** Process according to one of Claims 9 to 12, **characterized in that** at least some of the rubber particles are in one of the following forms: labyrinth, onion or capsule.

**14.** Process according to Claim 13, **characterized in that** at least 95% of the rubber particles are in capsule form.